(19) Europäisches Patentamt
European Patent Office
Office européen des brevets

(11) EP 4 583 183 A1

# (12) EUROPEAN PATENT APPLICATION
published in accordance with Art. 153(4) EPC

(43) Date of publication:
**09.07.2025 Bulletin 2025/28**

(21) Application number: **23921996.7**

(22) Date of filing: **17.02.2023**

(51) International Patent Classification (IPC):
***H01M 4/13*** *(2010.01)* ***H01M 4/62*** *(2006.01)*

(52) Cooperative Patent Classification (CPC):
**H01M 4/13; H01M 4/62;** Y02E 60/10

(86) International application number:
**PCT/CN2023/076886**

(87) International publication number:
**WO 2024/168854 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central (HK)**

(72) Inventors:
- **PENG, Shuangjuan**
  **Ningde, Fujian 352100 (CN)**
- **PENG, Lin**
  **Ningde, Fujian 352100 (CN)**
- **LI, Baiqing**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

## (54) ELECTRODE SHEET, AND BATTERY CELL, BATTERY AND ELECTRIC DEVICE RELATED THERETO

(57) Provided in the present application are an electrode sheet, and a battery cell, a battery and an electric device related thereto. The electrode sheet comprises a current collector and an active substance layer arranged on at least one surface of the current collector, wherein the active substance layer comprises an active substance and an ether polymer and satisfies formulae (1) to (3). The ether polymer, which serves as a constituent part of the active substance layer, can form uniform high-infiltration points inside the active substance layer and uniformly improve the infiltration performance of the active substance layer, such that the overall liquid absorption speed of the active substance layer is increased, and the cycling performance of a battery cell is improved.

$$\lambda = 1 - \frac{P_1}{P_2} \qquad \text{Formula (1)}$$

$$v = \pi \times \left(\frac{d}{2}\right)^2 \times h \times \frac{\rho}{t} \qquad \text{Formula (2)}$$

$$v/\lambda > 1.00 \qquad \text{Formula (3)}$$

EP 4 583 183 A1

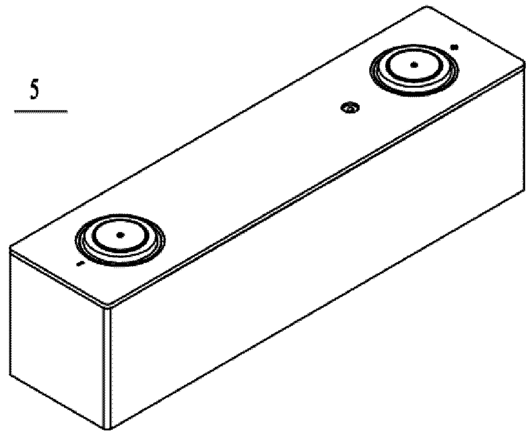


FIG. 1

## Description

### TECHNICAL FIELD

The present application relates to the field of battery, in particular to an electrode plate and a battery cell, battery and electrical device related thereto.

### BACKGROUND

Battery cells have the characteristics of high capacity and long life, and are therefore widely used in electronic devices, such as mobile phones, laptop computers, electric bicycles, electric vehicles, electric aircraft, electric ships, electric toy cars, electric toy ships, electric toy aircraft and electric tools.

As the application range of batteries becomes more and more extensive, the requirements for the performance of battery cells are also becoming more stringent. In order to improve the safety performance of battery cells, performances of the electrode plate inside battery cells are usually optimized and improved. However, the current active substance in the electrode plates has poor liquid absorption performance, which leads to poor cycle performance of battery cells when it is adapted to the battery cells.

### SUMMARY

The present application is made in view of the above issues, and its object is to provide an electrode plate, and related battery cell, battery, and electrical device.

A first aspect of the present application provides an electrode plate including a current collector and an active substance layer disposed on at least one surface of the current collector, wherein the active substance layer includes an active substance and an ether polymer, and the active substance layer satisfies:

$$\lambda = 1 - \frac{P_1}{P_2} \quad \text{Formula (1)},$$

$$v = \pi \times \left(\frac{d}{2}\right)^2 \times h \times \frac{\rho}{t} \text{Formula (2)},$$

$$v/\lambda > 1.00 \quad \text{Formula (3)},$$

where in Formula (1) to Formula (3),

$\lambda$ represents a porosity of the active substance layer;
$P_1$ represents an actual compaction density of the active substance layer, in units of g/cm$^3$;
$P_2$ represents a true compaction density of the active substance, in units of g/cm$^3$;
v represents a liquid absorption rate of the active substance layer, in units of mg/s,
d represents a diameter of a capillary tube in a capillary test for the active substance layer, in units of mm;
h represents a liquid level height in the capillary tube, in units of mm;
$\rho$ represents a density of an electrolytic solution in the capillary test, in units of g/cm$^3$;
t represents time during which the electrolytic solution is absorbed in the capillary tube, in units of s.

Accordingly, the ether polymer in the present application is introduced during the preparation process of the active substance layer, which can form a uniform high infiltration point inside the active substance layer and uniformly improve infiltration performance on the active substance layer, thereby increasing liquid absorption speed of the entire active substance layer and thus improving cycle performance of a battery cell using the electrode plate.

In some embodiments, the active substance includes a positive electrode active substance, and the active substance layer satisfies: $1.00 < v/\lambda < 4.00$; optionally, $1.20 \leq v/\lambda \leq 3.80$.

In some embodiments, the active substance includes a positive electrode active substance, and a mass percentage content of the ether polymer is A%, based on a mass of the active substance layer, wherein $0.1 \leq A \leq 1.5$. When the mass percentage content of the ether polymer is within the above range, the liquid absorption ability of the positive electrode active substance layer can be significantly improved.

In some embodiments, the active substance includes a negative electrode active substance, and the active substance layer satisfies: $3.00 < v/\lambda < 50.00$; optionally, $3.40 \leq v/\lambda \leq 30.00$.

In some embodiments, the active substance includes a negative electrode active substance, and a mass percentage content of the ether polymer is B%, based on a mass of the active substance layer, wherein $0.2 \leq B \leq 5.0$. When the mass percentage content of the ether polymer is within the above range, the liquid absorption ability of the negative electrode active substance layer can be significantly improved.

In some embodiments, the ether polymer has a slope K of an elastic modulus G'-loss modulus G" curve that is measured by subjecting a sheet-like structure formed of the ether polymer to dynamic frequency scanning tests at $(T_m+20)$°C, and $1<K<\infty$, optionally $1<K\leq 100$, further optionally $1<K\leq 10$, where $T_m$°C represents the melting temperature of the ether polymer. As a result, when the polymer of the present application meets the above range, it can further reduce the entanglement of the molecular chains, which is beneficial for the diffusion of solvent molecules in the electrolytic solution between the molecular chains and facilitates the formation of a gel-state substance. Moreover, the polymer still maintains a certain degree of molecular chain entanglement, which is capable of locking the solvent molecules in situ in the internal part of the polymer, and is able to reduce the risk of the polymer being dissolved in the electrolytic solution, and to increase the stability of the polymer performance; In addition, it is favorable for the polymer to form a protective layer on the surface of the active substance, improve the solid-liquid interface performance, reduce the side reaction between the active substance and the electrolytic solution, and improve the cycle performance and storage performance of the battery cell.

In some embodiments, the ether polymer has a glass transition temperature of $T_g$°C, and $-100\leq T_g\leq 50$; optionally, $-80\leq T_g\leq 30$. The ether polymer has a relatively low glass transition temperature, its molecular chains have a better chain segment flexibility, and adjacent molecular chains are more likely to separate so as to form an in-situ gel easily, thereby improving the infiltrability of the electrolytic solution to the active substance layer and thus improving the cycle performance of the battery cell.

In some embodiments, the ether polymer comprises the structural unit shown in Formula (I):

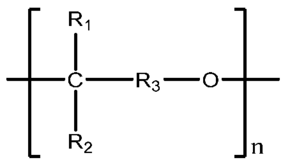
Formula (I).

In Formula (I), $R_1$ and $R_2$ each independently comprise a hydrogen atom, a substituted or unsubstituted C1-C3 alkyl group, or a substituted or unsubstituted C1-C3 alkoxy group; $R_3$ comprises a substituted or unsubstituted C1-C5 methylene group; optionally, $R_1$ and $R_2$ each independently comprise a hydrogen atom, a substituted or unsubstituted C1-C2 alkyl; and/or $R_3$ comprises a single bond, a substituted or unsubstituted C1-C4 methylene group.

In some embodiments, the ether polymer comprises at least one of the structural units shown in Formula (I-1) to Formula (I-8),

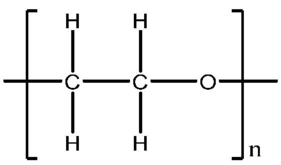
Formula (I-1),

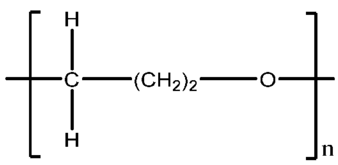
Formula (I-2),

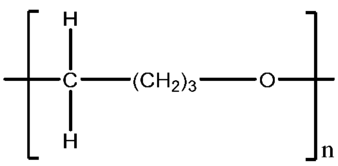
Formula (I-3),

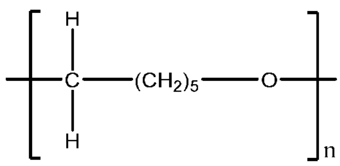
Formula (I-4),

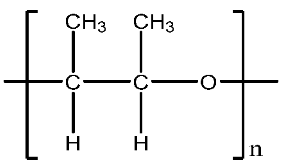
Formula (I-5),

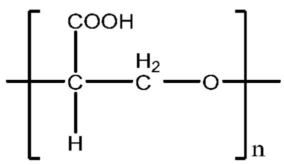
Formula (I-6),

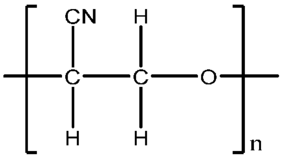 Formula (I-7), 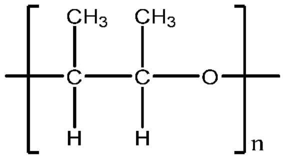 Formula (I-8).

In some embodiments, the ether polymer comprises the structural units shown in Formula (II),

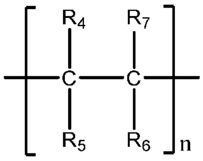 Formula (II).

In Formula (II), $R_4$ to $R_7$ each independently comprise a hydrogen atom, a substituted or unsubstituted C1-C3 alkyl group, or a substituted or unsubstituted C1-C3 alkoxy group or ether group, and at least one of $R_4$ to $R_7$ comprise a substituted or unsubstituted C1-C3 alkoxy group or ether group. Optionally, $R_4$ to $R_7$ each independently comprise a hydrogen atom, a hydroxyl group, a substituted or unsubstituted C1-C2 alkyl group, or a substituted or unsubstituted C1-C2 alkoxy group or ether group, and at least one of $R_4$ to $R_7$ comprise a substituted or unsubstituted C1-C2 alkoxy group or ether group.

In some embodiments, the ether polymer comprises at least one of the structural units shown in Formula (II-1) to Formula (II-7),

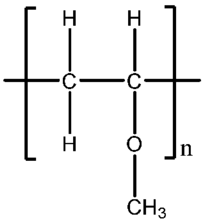 (II-1), 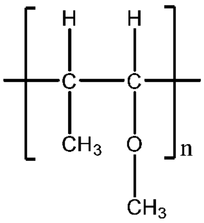 (II-2), 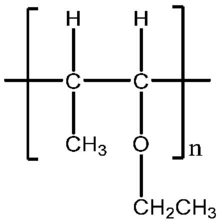 (II-3),

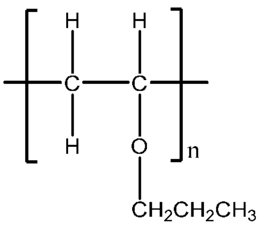 (II-4), 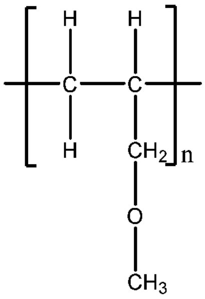 (II-5), 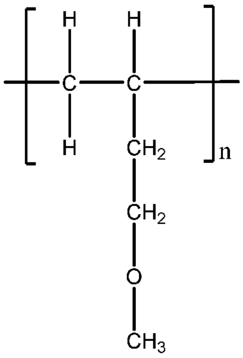 (II-6),

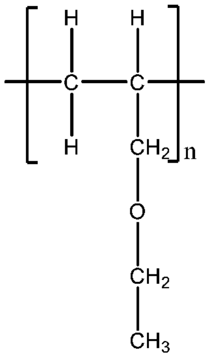
(II-7).

In some embodiments, n is a positive integer selected from 1500 to 25000; and/or the ether polymer has a molecular weight of from $1.2\times10^5$g/mol to $1.0\times10^6$g/mol. When the molecular weight of the polymer is within the above range, it can ensure that the polymer exhibits a certain degree of solubility in the electrolytic solution while not being completely dissolved and dispersed by the electrolytic solution, which is beneficial for regulating the distribution and dispersion of the polymer on the surface of the active substance. Furthermore, it can further enhance the flexibility of the molecular chains of the polymer, with a relatively weak intermolecular force, which is conducive to the solvent molecules in the electrolytic solution to separate the molecular chains and enter the space among the molecular chains, and then be encapsulated by the molecular chains. This, in turn, facilitates active ions to pass through the solvent into the active substance, achieving smooth and rapid migration of the active ions.

In some embodiments, the polymer is added to a first solvent at 45°C to form a polymer system, and the polymer system is allowed to stand at 45°C for 8h and then at 25°C for ≥24h, and filtered through a 200-mesh filter, to obtain remains as a first substance, the polymer satisfies $5 \leq m/n \leq 1000$, in which n represents a mass of the polymer, in grams, and m represents a mass of the first substance, in grams,

As a result, by increasing the temperature, the present application can enable the molecular chains of the polymers to spread within a temperature range where the battery cell can work in a safe way, so as to promote attractive interaction and physical bonding of the molecular chains of the polymers with the solvents. At room temperature, the polymers have low activity of the molecular chain segments, and thus maintain their adherence to the surface of the active substance while locking the electrolytic solution in the spatial environment of the polymers to form an in-situ gel-like state, improving the liquid storage capacity of the active material and thereby enhancing the cycle performance. This maintains normal lithium ion transport while protecting the active substance interface, thereby establishing interface protection, reducing surface side reactions, and improving cycle performance and storage performance.

A second aspect of the present application provides a battery cell comprising an electrode plate as described in any embodiment of the first aspect of the present application.

A third aspect of the present application provides a battery, comprising the battery cell as described in the second aspect of the present application.

A fourth aspect of the application provides an electrical device comprising the battery as described in the third aspect of the present application.

## DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.

FIG. 1 is a schematic diagram of an embodiment of a battery cell according to the present application.
FIG. 2 is an exploded view of the embodiment of the batty cell of FIG. 1.
FIG. 3 is a schematic diagram of an embodiment of a battery module according to the present application.
FIG. 4 is a schematic diagram of an embodiment of a battery pack according to the present application.
FIG. 5 is an exploded view of the embodiment of the battery pack of FIG. 4.
FIG. 6 is a schematic diagram of an embodiment of an electrical device that comprises a battery cell of the present application as a power source.

The drawings are not drawn to actual scale.

Reference numerals are as follows: 1. Battery pack; 2. Upper case body; 3. Lower case body; 4. Battery module;

5. Battery cell; 51. Housing; 52. Electrode assembly; 53. Cover plate; 6. Electrical device.

## DETAILED DESCRIPTION

Hereinafter, embodiments of the electrode plate and related battery cell, battery and electrical device according to the present application will be described in detail. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like. Unless stated otherwise, all the embodiments and the optional embodiments of the present application can be combined with each other to form a new technical solution. Unless stated otherwise, all technical features and optional technical features of the present application can be combined with each other to form a new technical solution.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise/comprising", "include/including", and "contain/containing" mentioned in the present application mean that it is drafted in an open mode, or it may also mean a close mode. For example, the transition phases "comprise/comprising", "include/including", and "contain/containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

In the present application herein, the terms "multiple" and "more than one" mean two or more, unless otherwise stated and specifically limited.

The term "alkyl" covers both linear and branched alkyl. For example, alkyl may be C1-C5 alkyl, C1-C4 alkyl, C1-C3 alkyl, C1-C2 alkyl. In some embodiments, alkyl comprises methyl, ethyl, propyl, isopropyl, butyl, isobutyl, and the like. In addition, alkyl may be optionally substituted. When substituted, the substituent comprises a fluorine atom.

The term "alkoxy" refers to a group in which alkyl is connected to an oxygen atom by a single bond. For example, alkoxy may be C1-C5 alkoxy, C1-C3 alkoxy, C1-C2 alkoxy. In some embodiments, alkoxy may comprise methoxy, ethoxy, or propoxy. In addition, alkoxy may be optionally substituted.

The term "hydroxyalkyl" refers to a functional in which a hydroxyl group is connected to an alkyl group through a single bond. For example, the hydroxyalkyl group may be C1 to C8 hydroxyalkyl, C1 to C5 hydroxyalkyl, C1 to C3 hydroxyalkyl, or C1 to C2 hydroxyalkyl. In some embodiments, hydroxyalkyls may include hydroxymethyl, hydroxyethyl, hydroxypropyl, hydroxybutyl, and the like. In addition, hydroxyalkyls may be optionally substituted.

The term "halogen atom" refers to a fluorine atom, a chlorine atom, a bromine atom, and the like.

The term "hydrogen" refers to 1H (protium, H), 2H (deuterium, D) or 3H (tritium, T). In each embodiment, "hydrogen" may be 1H (protium, H).

The battery cell comprises an electrode assembly and an electrolytic solution, and the electrode assembly comprises a positive electrode plate, a negative electrode plate, and a separator disposed between the positive electrode plate and the negative electrode plate. The electrode assembly has gap-pore structure, and the electrolytic solution infiltrates into the electrode assembly. The driving force of the infiltration is mainly capillary force, which is in a spontaneous infiltration and absorption process. Due to the barrier of the current collector in the electrode plate, the electrolytic solution

infiltrates into the electrode assembly from the end face of the electrode assembly through infiltration and absorption of the separator. As a result, the layer gap of the electrode assembly provides a solution guiding action, while the separator provides a solution diversion action. The step of infiltration of the electrolytic solution inside the electrode assembly includes: (1) The electrolytic solution is transmitted in the gap between the electrode plate and the separator under the action of capillary force; (2) The electrolytic solution preferentially percolates in the pores of the separator (the infiltration rate of the electrolytic solution in the separator is much higher than that in the active substance layer of the electrode plate); (3) The electrolytic solution diffuses to the surfaces of the positive electrode plate and the negative electrode plate on both sides through the separator and seeps into the pores of the active substance layer.

In related technologies, the electrode plate has poor affinity with the electrolytic solution, and relatively poor infiltration of the electrode plate, resulting in a slow diffusion rate of the electrolytic solution from the surface of the active substance layer to the inside of the active substance layer, and a relatively poor liquid absorption performance of the active substance, thereby deteriorating the cycle performance of the battery cell.

In view of this, in embodiments of the present application, from the viewpoint of improving the liquid absorption rate of the active substance layer, the inventors have improved a substance (such as an ether polymer) in the active substance layer, in order to increase the liquid absorption rate and thereby improve the cycle performance of the battery cell.

## Electrode plate

In the first aspect, the present application provides an electrode plate, comprising a current collector and an active substance layer disposed on at least one surface of the current collector, wherein the active substance layer comprises an active substance and an ether polymer. The electrode plate may be a positive electrode plate and/or a negative electrode plate; accordingly, the positive electrode plate comprises a positive active substance layer; and the negative electrode plate comprises a negative active substance layer.

The electrode plate can be formed by applying a slurry on a current collector, followed by drying and cold-pressing. Alternatively, the electrode plate is derived from a battery cell, by disassembling the battery cell, taking out the electrode plate infiltrated in an electrolytic solution in the battery cell, and placing the electrode plate infiltrated in the electrolytic solution under the condition of 100°C for vacuum drying for 12 hours to obtain said electrode plate, and the electrode plate is used for electrode plate tests such as test for liquid absorption rate.

The ether polymer can be synthesized by emulsion polymerization, suspension polymerization, bulk polymerization, solution polymerization and the like. Alternatively, the ether polymer is derived from a battery cell, by disassembling the battery cell, taking out the electrode plate infiltrated in an electrolytic solution in the battery cell, peeling off the active substance of the obtained electrode plate by an external force to form a powder sample, adding the powder sample to dimethyl carbonate (DMC), stirring at 80°C for 8 hours @ 500 rpm, then allowing to stand at room temperature for 10 minutes after the stirring is completed, and taking the supernatant at 80°C, and drying for 12 hours to obtain the ether polymer. The resulting ether polymer may be mixed with a little lithium salt, but the salt basically does not affect the infrared test and precipitation value test; In order to ensure the accuracy of tests on the ether polymer, flushing with DMC at room temperature may be used to remove the lithium salt.

The active substance layer satisfies:

$$\lambda = 1 - \frac{P_1}{P_2} \qquad \text{Formula (1),}$$

$$v = \pi \times \left(\frac{d}{2}\right)^2 \times h \times \frac{\rho}{t} \qquad \text{Formula (2),}$$

$$v/\lambda > 1.00 \qquad \text{Formula (3),}$$

where in Formula (1) to Formula (3),

- $\lambda$ represents a porosity of the active substance layer;
- $P_1$ represents an actual compaction density of the active substance layer, in units of g/cm$^3$;
- $P_2$ represents a true compaction density of the active substance, in units of g/cm$^3$;
- v represents a liquid absorption rate of the active substance layer, in units of mg/s,
- d represents a diameter of a capillary tube in a capillary test for the active substance layer, in units of mm;

h represents a liquid level height in the capillary tube, in units of mm;
ρ represents a density of an electrolytic solution in the capillary test, in units of $g/cm^3$;
t represents time during which the electrolytic solution is absorbed in the capillary tube, in units of s.

In the present application, the actual compaction density $P_1$ refers to the ratio of the mass to the thickness of the active substance layer per area in the electrode plate. The actual compaction density is influenced by the force of rolling after coating the electrode plate, and expressed in units of $g/cm^3$. A specific test includes the steps of taking an electrode plate with a certain area S, weighing the mass M of active substance layer in the electrode plate, and measuring the thickness D of the active substance layer, and the actual compaction density = M/(S × D).

In the present application, the true compaction density $P_2$ refers to the density of the active substance itself in the active substance layer. Taking active substance being negative electrode active substance as an example, such as graphite, the density of the graphite is 2.25 $g/cm^3$, then the active substance has a true compaction density of 2.25 $g/cm^3$.

Taking the positive electrode active substance as an example, specifically, it refers to the true compaction density determined according to P = m/V where m is the mass of the "solid substance per actual volume" (excluding open holes and closed holes and pores between particles) in a dense state, V is the true volume obtained by testing, which can be tested with reference to GB/T24586-2009. Specifically, the test steps may be as follows:

1) Pre-treatment: Taking a clean and dry sample cup and placing it on a balance, taring it, adding a powder sample to the sample cup, with the powder sample accounting for about 1/2 of the volume of the sample cup, and recording a mass of the sample;
2) Placing the sample cup containing the sample in a true density tester, sealing the test system, introducing helium gas according to the program, measuring the gas pressure in the sample chamber and the expansion chamber, and then calculating the true volume according to Bohr's law (PV = nRT), to calculate the true compaction density.

In the test, the sample cup has a volume of 3.5 $cm^3$, and helium is used as analytical gas.

According to the Formula (1), the porosity λ of the active substance layer can be calculated by using the actual compaction density and the true compaction density.

Specifically, $$\lambda = \frac{V1-V2}{V1} = 1-\frac{V2}{V1} = 1-\frac{m/V1}{m/V2} = 1-\frac{P_1}{P_2}.$$

V1 represents the volume of the active substance layer having a mass m, in units of $cm^3$;
V2 represents the volume occupied by active particles in the active substance layer having a mass m, in units of $cm^3$;
m represents the mass of the active substance layer, in units of g.

Equation (2) can characterize the speed at which a certain point of an electrode plate basically completely absorbs the liquid (such as electrolytic solution) in capillary tube per unit time. In the present application, a certain point of the electrode plate refers to a region in which the electrode plate has a certain area which corresponds to the cross-sectional area of the capillary tube.

In the present application, a method for measuring the liquid absorption rate of an electrode plate includes the following steps:

Sucking a predetermined amount of electrolytic solution using a capillary tube;
Contacting the capillary tube with the electrode plate, allowing the electrode plate to be measured to absorb the electrolytic solution in the capillary tube under capillary action;
After a predetermined time period t, recording the liquid level height h at which the electrolytic solution in the capillary tube is absorbed, and calculating the amount of the absorbed electrolytic solution by using the liquid level height h and the diameter d of the capillary tube and the density ρ of the electrolytic solution, and then quantitatively calculating the liquid absorption rate v of the electrode plate based on the ratio of the absorbed amount and the predetermined time period t.

Exemplarily, d may be a value from 0.2 to 1, e.g. a value of 0.2; h may be a value from 3 to 5, e.g. a value of 3.

The capillary tube has a capillary channel to enable the capillary tube to directly suck the electrolytic solution through capillary action, without the need for an external drive unit to provide the sucking force. In this way, on the one hand, when the electrolytic solution is sucked through capillary action, the suction amount can be controlled more accurately; On the other hand, because the electrode plate to be measured absorbs the electrolytic solution through its own capillary action only when the electrode plate is in contact with the capillary tube, the electrode plate sucks the electrolytic solution out from the capillary tube, and when the electrode plate is out of contact, the electrolytic solution in the capillary tube no

longer flows out, so that the reduced amount of electrolytic solution in the capillary tube during the contact can accurately reflect the corresponding volume of electrolytic solution absorbed by the electrode plate, thereby further improving the accuracy of test results and realizing quantitative calculation of the absorption rate of electrolytic solution absorbed by the electrode plate.

The present application uses a standard electrolytic solution as a test sample, and the specific formulation of the electrolytic solution can be referred to the electrolytic solution formulation in the embodiments.

Formula (3) represents a liquid absorption rate of an electrode plate at a porosity $\lambda$, and may be used to characterize the liquid absorption rate of the electrode plate.

The ether polymer in the present application is introduced during the preparation process of the active substance layer, which can form a uniform high infiltration point inside the active substance layer and uniformly improve infiltration performance on the active substance layer, thereby increasing liquid absorption speed of the entire active substance layer and thus improving cycle performance of a battery cell using the electrode plate.

Optionally, $1.00 < v/\lambda < 50.00$.

In some embodiments, the ether polymer is formed into a sheet-like structure. The sheet-like structure is subjected to dynamic frequency scanning tests at $(T_m+20)$°C to obtain an elastic modulus G'-loss modulus G" curve, the slope of which is K, and $0.8 \leq K < \infty$, $0.8 \leq K \leq 100$; optionally, $0.8 \leq K \leq 10$; $T_m$°C represents the melting temperature of the ether polymer.

Specifically, the preparation process of the sheet-like structure is as follows: the polymer is vacuum-dried at 80°C for 12h. The dried polymer is then hot-pressed into sheets using a plate vulcanizing machine, with the hot-pressing temperature set to $(T_m+20)$°C, the rolling thickness is 1-2min, the rolling time is 2min, and the pressure is 8MPa. After rolling for 2min, the sample is removed and placed on another vulcanizing machine of the same model for cold pressing, with a pressure of 10MPa. A fixed-size polymer disc (sheet-like structure) can be obtained using a 25mm diameter circular mold. As an example, the sheet-like structure can be a disc with a thickness of 1-2mm and a diameter of 25mm; it can also be made to the sample standard required by the testing equipment.

According to the conclusions of classical linear viscoelasticity, for polymers, especially linear polymers, the elastic modulus G'-loss modulus G'' in the terminal region (the range of angular velocity approaching the maximum value) of the elastic modulus G'-loss modulus G" curve exhibits frequency dependence, and the longest chains of the polymer play a role in the viscoelastic behavior.

The specific steps for measuring the dynamic frequency scan are as follows: a TA-AR2000EX rotational rheometer (TA Instruments, USA) is used to perform the dynamic frequency scan test, with parallel plates having a diameter of 25mm and a thickness of 0.9mm. To ensure that the test is conducted in the linear viscoelastic region, the strain during the dynamic frequency scan test should be 2%, the test temperature is set to $(T_m+20)$°C, and the frequency scan range is 500 rad/s $\leq w^2 \leq$ 0.05 rad/s, to obtain data from the lowest frequency region as much as possible.

The dynamic frequency scan test can characterize the degree of entanglement of molecular chains in the solid-phase melting (molten state) condition. Compared to linear structures or short branched structures, long-branched structures, networked structures, and low cross-linked structures have a higher degree of entanglement and will exhibit behavior deviating from linear terminal behavior, and thus polymers show solid-phase behavior. When the polymers of the present application meet the aforementioned range, they can further reduce the entanglement of molecular chain, which is beneficial for the diffusion of solvent molecules in the electrolytic solution between the molecular chains. Moreover, the polymers still maintain a certain degree of molecular chain entanglement, which is capable of locking the solvent molecules in situ in the internal part of the polymer, and is able to reduce the risk of the polymer being dissolved in the electrolytic solution, and to increase the stability of the polymer performance. In addition, it is favorable for the polymer to form a protective layer on the surface of the active substance, improve the solid-liquid interface performance, reduce the side reaction between the active substance and the electrolytic solution, and improve the cycle performance of the battery cell.

In some embodiments, the ether polymer has a glass transition temperature of $T_g$ in °C, $-100 \leq T_g \leq 50$; optionally, $-80 \leq T_g \leq 30$.

The glass transition temperature is such a temperature at which the chain segments of the ether polymer transforms from freezing to movement, and the glass transition temperature has a certain effect on the flexibility of the ether polymer molecular chain. The lower the glass transition temperature, the better the flexibility of the ether polymer molecular chain at normal temperature, and the higher the glass transition temperature, the worse the flexibility of the molecular chain at normal temperature. The glass transition temperature can be measured by differential scanning calorimetry DSC. Specifically, the test procedure is as follows: taking 0.5g to 0.8g of a sample, placing it in a carrier crucible, and subjecting it to a heating and cooling cycle under nitrogen atmosphere, with a heating rate of 10°C/min from an initial temperature 20°C below the material's intrinsic $T_g$ to a final temperature 20°C above the material's intrinsic $T_m$. The actual glass transition temperature $T_g$ and melting temperature $T_m$ are determined based on the endothermic and exothermic peaks or transition points observed during the process.

The glass transition temperature of the ether polymer is relatively low, the chain segment flexibility of molecular

chains is better, and adjacent molecular chains can be easily separated, and it is easier to form an in-situ gel, thereby improving the infiltrating performance of the electrolytic solution into the active substance layer, thereby improving the cycle performance of battery cells. Exemplarily, the glass transition temperature of the ether polymer may be -100°C, -90°C, -80°C, - 60°C, -30°C, 0°C, 30°C, 50°C, or within a range consisting of any two of the above values.

In some embodiments, the ether polymer comprises the structural unit shown in Formula (I):

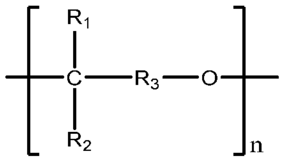 Formula (I).

In Formula (I), $R_1$ and $R_2$ each independently comprise a hydrogen atom, a substituted or unsubstituted C1-C3 alkyl group, or a substituted or unsubstituted C1-C3 alkoxy group; $R_3$ comprises a substituted or unsubstituted C1-C5 methylene group. Optionally, $R_1$ and $R_2$ each independently comprise a hydrogen atom, a substituted or unsubstituted C1-C2 alkyl; and/or $R_3$ comprises a single bond, a substituted or unsubstituted C1-C4 methylene group.

As an example, the ether polymer comprises at least one of the structural units shown in Formula (I-1) to Formula (I-8),

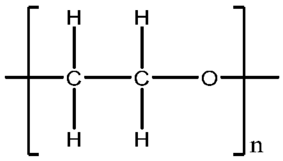 Formula (I-1), 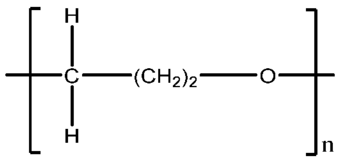 Formula (I-2),

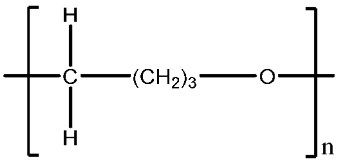 Formula (I-3), 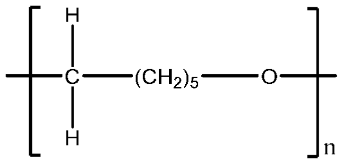 Formula (I-4),

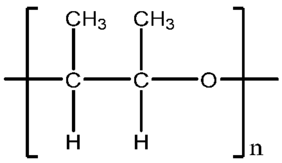 Formula (I-5), 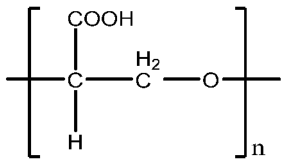 Formula (I-6),

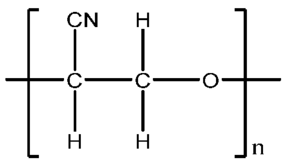 Formula (I-7), 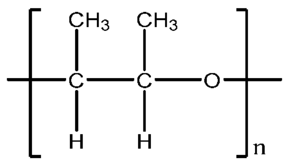 Formula (I-8).

As an example, the ether polymer comprises the structural unit shown in Formula (II),

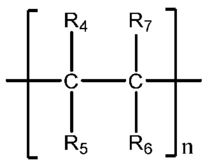 Formula (II).

In Formula (II), $R_4$ to $R_7$ each independently comprise a hydrogen atom, a substituted or unsubstituted C1-C3

alkyl group, or a substituted or unsubstituted C1-C3 alkoxy group or ether group, and at least one of $R_4$ to $R_7$ comprise a substituted or unsubstituted C1-C3 alkoxy group or ether group. Optionally, $R_4$ to $R_7$ each independently comprise a hydrogen atom, a substituted or unsubstituted C1-C2 alkyl group, or a substituted or unsubstituted C1-C2 alkoxy group or ether group, and at least one of $R_4$ to $R_7$ comprise a substituted or unsubstituted C1-C2 alkoxy group or ether group.

In some embodiments, the ether polymer comprises at least one of the structural units shown in Formula (II-1) to Formula (II-7),

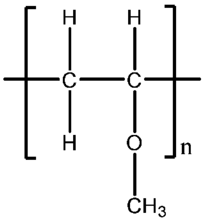 (II-1), 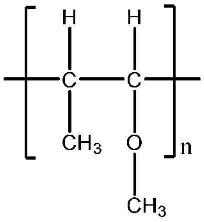 (II-2), 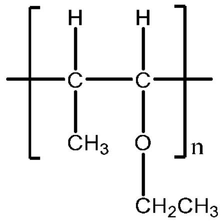 (II-3),

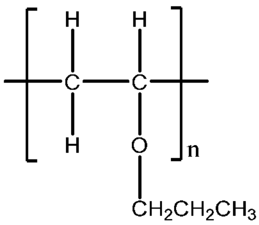 (II-4), 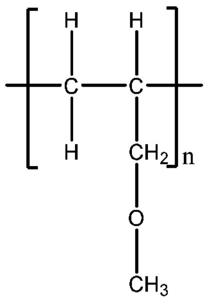 (II-5), 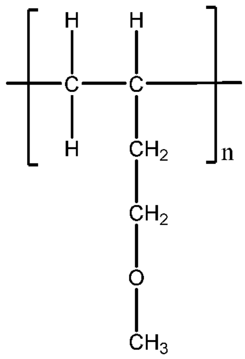 (II-6),

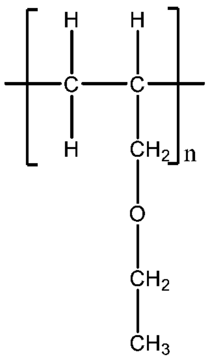 (II-7).

The monomers forming the aforementioned ether polymers are those have polycyclic structures, for example, six- or less-membered ring structures, or short-chain monomers, which makes them easier to be polymerized to form -O-structures with a high content. Such types of structures have a lower degree of molecular chains entanglement, which is advantageous for improving flexibility of the molecular chains, and the molecular chains can fully be stretched out in an electrolytic solution, thereby further improving the interfacial performance of the active substance.

The aforementioned polymers are examples of structural groups for the main chain only. In the embodiments of the present application, the polymers can also be copolymers obtained by combining the above structural groups with other types of structural groups (such as olefin structural units, acrylonitrile structural units, etc.).

The groups of the polymer of the present application can be detected by infrared spectrophotometry IR. Specifically, the polymer is tested with a Thermo Nicolet Nexus 670 Attenuated Total internal Reflectance Fourier Transform Infrared spectroscopy (FTIR-ATR), with reference to GB/T6040-2002, within the test range: ATR method 600-4000cm$^{-1}$; repeatability: $\pm$2cm$^{-1}$; resolution: better than 4cm$^{-1}$; transmission depth of 0.2-0.6 $\mu$m.

The structure of the polymer of the present application can be tested by nuclear magnetic resonance NMR. Specifically, 1H NMR and 13C NMR are performed on a Varian Mercury Plus-400 NMR Nuclear Magnetic Resonance Spectrometer at a testing temperature of 20 °C, with TMS as an internal standard, $CDCl_3$ as a solvent, and a proton resonance frequency of 400 MHz.

The type of polymer monomers in the polymers of the present application (particularly suitable for monomers that make up a smaller proportion in the polymer) can be determined by pyrolysis-gas chromatography-mass spectrometry. The specific test steps are as follows: accurately weigh 0.5 mg of the sample into a sample cup, fix it on the injection rod, and then load it into the pyrolyzer installed near the GC (gas chromatography) injection port; after the pyrolyzer temperature reaching the set temperature, press the injection button, and the sample cup quickly falls into the heart of the pyrolysis furnace through free fall; in an inert gas $N_2$ atmosphere, volatile components are instantly vaporized and carried into the gas chromatography column by the carrier gas for separation, and finally detected by a flame ionization detector FID or a mass spectrometer MS, thereby obtaining a gas chromatogram or a total ion chromatogram.

When the aforementioned groups are substituted, the substituents may comprise one or more of cyano group (-CN), nitro group, sulfonic acid group, sulfonyl group, amide, carboxyl group, ester group, a halogen atom. If the above substituents are high-pressure resistant substituents, it is more conducive to stabilizing the structure of the polymer. A halogen atom may comprise a fluorine atom, a chlorine atom, a bromine atom and the like.

In some embodiments, n is a positive integer selected from 1500 to 25000.

Optionally, n is a positive integer selected from 3000 to 18000.

In some embodiments, the polymer has a molecular weight of from $1.2\times10^5$g/mol to $1.0\times10^6$g/mol.

When the molecular weight of the polymer is within the above range, it can ensure that the polymer exhibits a certain degree of solubility in the electrolytic solution while not being completely dissolved and dispersed by the electrolytic solution, which is beneficial for regulating the distribution and dispersion of the polymer on the surface of the active substance. Furthermore, it can further enhance the flexibility of the molecular chains of the polymer, with a relatively weak intermolecular force, which is conducive to the solvent molecules in the electrolytic solution to separate the molecular chains and enter the space among the molecular chains, and then be encapsulated by the molecular chains. This, in turn, facilitates active ions to pass through the solvent into the active substance, achieving smooth and rapid migration of the active ions. Exemplary, the molecular weight of the polymer may be $1.2\times10^5$g/mol, $2\times10^5$g/mol, $5\times10^5$g/mol, $8\times10^5$g/mol, $1\times10^6$g/mol, or within a range consisting of any two of the above values.

The molecular weight of the ether polymer has a well-known meaning in the art and can be determined by the equipment and methods commonly used in the art. It can be tested with a gel permeation chromatography GPC with the specific test steps as follows: An appropriate amount of the sample to be tested (the sample concentration is guaranteed to be 8%-12% shading) is taken, 20ml deionized water is added, and the resulting mixture is ultrasonicated for 5min (53KHz/120W) to ensure that the sample is completely dispersed, and then the sample is determined according to GB/T19077-2016/ISO 13320:2009.

Alternatively, a multi-angle laser light scatterer MALLS is used. Specifically an instrument of GPC combined with a Dawn Heleos II mode multi-angle laser light scatterer, an Optilab T-rEX refractive index (RI) detector and a Visco Star II viscometer (Wyatt Technology Corporation, USA) is used. The test is carried out at 30° with THF as a mobile phase at a flow rate of 1.0 ml/min. The commercial software ASTRA6 is used to process the SEC-SAMLL data to obtain molecular weight parameters.

When the ether polymer in embodiments of the present application further meets one or more of the following conditions, the cycle performance of the battery cell can be further improved.

In some embodiments, the ether polymer is added to a first solvent at 45°C to form a ether polymer system; The ether polymer system is allowed to stand for 8 hours at 45°C, and for ≥ 24 hours at 25°C. After the above two stages of standing treatment, the ether polymer system is partially or completely transformed in situ into a gel state substance. The ether polymer system is then filtered through a 200-mesh filter screen to remain a first substance. The ether polymer and the first substance satisfy: $5 \leq m/n \leq 1000$, in which n represent a mass of the polymer, in units of gram, and m represents a mass of the first substance, in units of gram; optionally, $10 \leq m/n \leq 1000$; further optionally, $10 \leq m/n \leq 50$. Exemplarily, m/n may be 5, 10, 20, 25, 28, 30, 32, 35, 40, 50, 80, 100, 200, 500, 1000, or a range composed of any two of the above values. Exemplarily, based on the mass of the ether polymer system, a ratio of the mass content of the ether polymer and the mass content of the first solvent ranges from 1: 100 to 1: 10, such as 3:50. Exemplarily, the first solvent is the same as or similar to the solvent of the electrolytic solution, and the first solvent may comprise a carbonate-based solvent. For example, a carbonate-based solvent comprise a cyclic carbonate solvent and/or a linear carbonate solvent.

Examples of the cyclic carbonate solvent comprise one or more of ethylene carbonate (EC), vinylene carbonate (VC), fluoroethylene carbonate (FEC), difluoroethylene carbonate (DFEC), vinyl ethylene carbonate (VEC), and dicarpylyl carbonate (CC).

As an example, the linear carbonate solvent comprises one or more of dimethyl carbonate (DMC), diethyl carbonate (DEC), ethyl methyl carbonate (EMC), diphenyl carbonate (DPC), methyl acrylate carbonate (MAC), and polycarbonate (VA).

Optionally, the first solvent may simultaneously contain a lithium salt and an additive for an electrolytic solution, such as lithium hexafluorophosphate, vinylene carbonate (VC), fluoroethylene carbonate (FEC), and the like.

In the present application, m/n is also referred to as a precipitation value, which characterizes the ability of the ether polymer and solvent to transform into a gel-state substance.

The first substance mainly comprises a gel-state substance formed by an ether polymer and a first solvent, and in the gel-state substance, the molecular structure of the ether polymer substantially keep unchanged.

In some embodiments, the first substance is dried at 80°C for 12 hours to remove the first solvent from the first substance, and is tested by infrared spectrophotometry (IR) or nuclear magnetic resonance (NMR). The main component of the first substance after drying is the ether polymer as described above.

In the present application, by increasing the temperature, the stretching of the ether polymer molecular chain can be realized within the safe working temperature range of a battery cell, , which promotes the mutual attraction and physical binding between the molecular chains of the ether polymers and the solvent, thereby improving the liquid absorption ability. At normal temperature, the molecular segments of the ether polymers have decreases mobility, and remain attached to the surface of the active substance and lock the electrolytic solution in the space environment where the polymer is located, thereby forming a state similar to an in-situ gel, improving the liquid locking ability and improving the cycle performance.

**Positive Electrode Plate**

The positive electrode plate comprises a positive current collector and a positive electrode active substance layer disposed on at least one surface of the positive current collector, wherein the positive electrode active substance layer comprises a positive electrode active substance and an ether polymer. In the present application, the ether polymer comprises the ether polymer as described above.

For example, the positive current collector has two surfaces that are opposite to each other in the direction of its own thickness. The positive electrode active substance layer is disposed on either or both of the two opposite surfaces of the positive current collector.

In some embodiments, $1.00<v/\lambda<4.00$; optionally, $1.20\leq v/\lambda\leq 3.80$; further optionally, $1.4\leq v/\lambda\leq 3.6$. Exemplarily, $v/\lambda$ may be 1.20, 1.40, 1.80, 2.00, 2.50, 3.00, 3.50, 3.60, 3.80, 3.90, or within a range consisting of any two of the aforementioned values.

In some embodiments, based on the mass of the positive electrode active substance layer, the ether polymer is present in a mass percentage of A%; where, $0.1\leq A\leq 1.5$.

When the mass percentage of the ether polymer is within the above range, it can significantly improve the liquid absorption ability of the positive electrode active substance layer. Exemplarily, the mass percentage content A% of the polymer may be 0.1%, 0.2%, 0.5%, 0.8%, 1.0%, 1.2%, 1.5%, or within a range consisting of any two of the aforementioned values.

The positive electrode active substance layer comprises a positive electrode active substance, which can be a positive electrode active substance known in the art for battery cells. Exemplarily, the positive electrode active substance may comprise at least one of layered structure positive electrode active substances (such as ternary, lithium/sodium nickel oxide, lithium/sodium cobalt oxide, lithium/sodium manganese oxide, rich lithium/sodium layered and rock salt phase layered materials, and the like), olivine structure phosphate active substances, and spinel structure positive electrode active substances (such as spinel lithium manganese oxide, spinel lithium nickel manganese oxide, rich lithium spinel lithium manganese oxide and lithium nickel manganese oxide and the like).

Exemplarily, the layered structure positive electrode active substances have a general formula of $Li_xA_yNi_aCo_bMn_cM_{(1-a-b-c)}Y_z$, $0\leq x\leq 2.1$, $0\leq y\leq 2.1$, and $0.9\leq x+y\leq 2.1$; $0\leq a\leq 1$, $0\leq b\leq 1$, $0\leq c\leq 1$, and $0.1\leq a+b+c\leq 1$; $1.8\leq z\leq 3.5$; A is one or more selected from Na, K, and Mg; M is one or more selected from B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y is one or more selected from O, and F. Optionally, y=0. Specifically, the layered structure positive electrode active substances may comprise one or more of lithium cobalt oxide LCO, lithium nickel oxide LNO, lithium manganese oxide LMO, $LiNi_{1/3}Co_{1/3}Mn_{1/3}O_2$ (NCM333), $LiNi_{0.8}Co_{0.1}Mn_{0.1}O_2$ (NCM811) and $LiNi_{0.5}CO_{0.2}Mn_{0.3}O_2$ (NCM523).

Exemplarily, the olivine-structure phosphate active substances have a general formula of: $Li_xA_yMe_aM_bP_{1-c}X_cY_z$, $0\leq x\leq 1.3$, $0\leq y\leq 1.3$, and $0.9\leq x+y\leq 1.3$; $0.9\leq a\leq 1.5$, $0\leq b\leq 0.5$, and $0.9\leq a+b\leq 1.5$; $0\leq c\leq 0.5$; $3\leq z\leq 5$; A is one or more selected from Na, K, and Mg; Me is one or more selected from Mn, Fe, Co, and Ni; M is one or more selected from B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is one or more selected from S, Si, Cl, B, C, and N; Y is one or more selected from O, and F. Specifically, the olivine-structure phosphate active substances comprise one or more of $LiFePO_4$, $LiMnPO_4$, $LiNiPO_4$, and $LiCoPO_4$.

Exemplarily, the spinel-structure positive electrode active substances have a general formula of: $Li_xA_yMn_aM_{2-a}Y_z$, $0\leq x\leq 2$, $0\leq y\leq 1$, and $0.9\leq x+y\leq 2$; $0.5\leq a\leq 2$; $3\leq z\leq 5$; A is one or more selected from Na, K, and Mg; M is one or more selected from Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y is one or more selected from O, and F. Specifically, the spinel-structure positive electrode active substances comprise one or more of $LiMn_2O_4$, $LiNi_{0.5}Mn_{1.5}O_4$, $LiCr_{0.3}Mn_{1.7}O_4$, $Li_{1.1}Al_{0.1}Mn_{1.9}O_4$, $Li_2Mn_2O_4$, and $Li_{1.5}Mn_2O_4$.

In some embodiments, the positive electrode current collector may be a metal foil or a composite current collector. As an example of a metal foil, an aluminum foil or an aluminum alloy foil may be used. The composite current collector may include a polymeric material matrix and a metallic material layer formed on at least one surface of the

polymeric material matrix. As an example, the metallic material may be one or more selected from aluminum, aluminum alloy, nickel, nickel alloy, titanium, titanium alloy, silver, and silver alloy, and the polymer material matrix may be one or more selected from polypropylene (PP), polyethylene terephthalate (PET), polybutylene terephthalate (PBT), polystyrene (PS), and polyethylene (PE).

In some embodiments, the positive electrode active substance layer may further optionally include a positive electrode conductive agent. In the present application, there is no particular limitation on the type of the positive electrode conductive agent. As an example, the positive electrode conductive agent includes one or more of superconducting carbon, conductive carbon black, conductive graphite, acetylene black, carbon black, Ketjen black, carbon dots, carbon nanotubes, graphene, and carbon nanofibers. In some embodiments, based on the total mass of the positive electrode active substance layer, the positive electrode conductive agent is present in a mass percentage of 5% or less.

In some embodiments, the positive electrode active substance layer may further optionally comprise a positive electrode binder. In the present application, there is no particular limitation on the type of the positive electrode binder. As an example, the positive electrode binder may include one or more of polyvinylidene fluoride (PVDF). In some embodiments, based on the total mass of the positive electrode active substance layer, the positive electrode binder is present in a mass percentage of 5% or less. The crystallinity of the positive electrode binder is higher than that of the polymer as described above, and the melting temperature of the positive electrode binder is higher than that of the ether polymer as described above.

The positive electrode active substance layer is usually made by applying a positive electrode slurry to the positive electrode current collector followed by drying and cold pressing. The positive electrode slurry is usually formed by dispersing the positive electrode active substance, the ether polymer, an optional conductive agent, an optional binder, and any other optional additives in a solvent and stirring uniformly. The solvent may be N-methylpyrrolidone (NMP), but is not limited thereto.

**Negative electrode plate**

The negative electrode plate comprises a negative electrode current collector and a negative electrode active substance layer disposed on at least one surface of the negative current collector, wherein the negative electrode active substance layer comprises a negative electrode active substance and an ether polymer. In the present application, the ether polymer comprises the ether polymer as described above. As an example, the negative electrode current collector has two surfaces that are opposite to each other in the direction of its own thickness. The negative electrode active substance layer is disposed on either or both of the two opposite surfaces of the negative electrode current collector.

In some embodiments, $3.00<v/\lambda<50.00$; optionally, $3.40\leq v/\lambda\leq 30.00$. Exemplarily, $v/\lambda$ may be 3.20, 3.40, 3.50, 4.00, 4.50, 5.00, 5.50, 6.00, 6.50, 7.00, 8.00, 9.00, 9.50, 10.00, 10.50, 11.00, 12.00, 13.00, 14.00, or within a range consisting of any two of the aforementioned values.

In some embodiments, based on the mass of the negative electrode active substance layer, the ether polymer is present in a mass percentage of B%; where $0.2\leq B\leq 5.0$. When the mass percentage of the ether polymer is within the aforementioned range, it can significantly improve the liquid absorption ability of the negative electrode active substance layer. Exemplarily, the mass percentage B% of the ether polymer may be 0.2%, 0.5%, 0.8%, 1.0%, 1.2%, 1.5%, 2.0%, 2.5%, 3.0%, 3.5%, 4.0%, 4.5%, 5.0%, or within a range consisting of any two of the aforementioned values.

In some embodiments, the negative electrode current collector may be a metal foil or a composite current collector. As an example of a metal foil, a copper foil may be used. The composite current collector may include a polymeric material matrix and a metallic material layer formed on at least one surface of the polymeric material matrix. The composite current collector may be formed by forming a metallic material (copper, copper alloy, nickel, nickel alloy, titanium, titanium alloy, silver, silver alloy and the like) on a polymer material matrix (such as polypropylene (PP), polyethylene terephthalate (PET), polybutylene terephthalate (PBT), polystyrene (PS), polyethylene (PE) and the like).

In some embodiments, the negative electrode active substance may be a negative electrode active substance known in the art for use in batteries. Exemplarily, the negative electrode active substance includes at least one of artificial graphite, natural graphite, soft carbon, hard carbon, silicon-based material, tin-based material, and lithium titanate. The silicon-based material may include at least one of elemental silicon, a silicon oxide, a silicon carbon composite, a silicon nitrogen composite, a silicon alloy. The tin-based materials may include at least one of elemental tin, a tin oxide, and a tin alloy. The present application is not limited to these materials, and other conventionally known materials that can be used as negative electrode active substances for batteries may also be used. These negative electrode active substances can be used alone, or in combination of two or more materials.

In some embodiments, the negative electrode active substance layer may further optionally comprise a negative electrode binder. The negative electrode binder may be at least one selected from styrene-butadiene rubber (SBR), polyacrylic acid (PAA), polyacrylic acid sodium salt (PAAS), polyacrylamide (PAM), polyvinyl alcohol (PVA), sodium alginate (SA), polymethacrylic acid PMAA, and carboxymethyl chitosan (CMCS). The crystallinity of the negative electrode binder is higher than that of the ether polymer as described above, and the melting temperature of the negative

electrode binder is higher than that of the ether polymer as described above.

In some embodiments, the negative electrode active substance layer may further optionally comprise a conductive agent. The negative electrode conductive agent may be at least one selected from superconducting carbon, acetylene black, carbon black, Ketjen black, carbon dots, carbon nanotubes, graphene, and carbon nanofibers.

In some embodiments, the negative electrode active substance layer may further optionally include other additives, for example thickener, such as sodium carboxymethyl cellulose (CMC).

In some embodiments, the negative electrode plate is prepared by dispersing the above-described component for the preparation of a negative electrode plate, for example a negative electrode active substance, the ether polymer, a conductive agent, a negative electrode binder, and any other optional additives in a solvent (for example deionized water) to form a negative electrode slurry; and applying the negative electrode slurry to the negative electrode current collector followed by drying, code-pressing and the like, thereby obtaining a negative electrode plate.

## Battery cell

In a second aspect, the present application provides a battery cell comprising a positive electrode plate, a negative electrode plate, a separator disposed between the positive electrode plate and the negative electrode plate, and an electrolyte. The battery cell may be a lithium-ion battery or the like.

In some embodiments, the positive electrode plate according to any one of the embodiments of the first aspect of the present application may be used as the positive electrode plate, thereby improving the cycle performance of the battery cell. A conventional electrode plate may be used as the negative electrode plate.

In some embodiments, the negative electrode plate according to any embodiment of the first aspect of the present application may be used as the negative electrode plate, thereby improving the cycle performance of the battery cell. A conventional positive electrode plate may be used as the positive electrode plate.

In some embodiments, the positive electrode plate according to any one of the embodiments of the first aspect of the present application may be used as the positive electrode plate, and the negative electrode plate according to any embodiment of the first aspect of the present application may be used as the negative electrode plate, thereby improving the cycle performance of the battery cell.

[Electrolyte]

The battery cell further comprises an electrolyte, which serves to conduct ions between the positive electrode plate and the negative electrode plate. There is no specific limitation on the type of electrolyte in the present application, and it can be selected according to the requirement. For example, the electrolyte may be in a liquid state, a gel state, or an all-solid state.

In some embodiments, an electrolytic solution is used as the electrolyte. The electrolytic solution comprises an electrolyte salt and a solvent.

As an example, the lithium salt may comprise one or more selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium difluorosulfimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate ($LiPO_2F_2$), lithium difluorobisoxalate phosphate (LiDFOP), and lithium tetrafluorooxalate phosphate (LiTFOP).

As an example, the organic solvent may comprise one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethylsulfone (MSM), methylethylsulfone (EMS), and diethylsulfone (ESE).

In some embodiments, the electrolytic solution may further optionally comprise an additive. For example, the additive may comprise a negative electrode film-forming additive, a positive electrode film-forming additive, as well as an additive that can improve certain performance of batteries, such as an additive that improves overcharge performance of batteries, an additive that improves high-temperature performance of batteries, and an additive that improves low-temperature performance of batteries.

[Separator]

In some embodiments, the battery cell further comprises a separator. The type of the separator is not particularly limited in the present application, and any well-known porous separator having good chemical stability and mechanical stability can be selected.

In some embodiments, the separator may be made of a material that comprises one or more selected from glass fiber, non-woven fabric, polyethylene, polypropylene and polyvinylidene fluoride. The separator can be a single-layer film or a multilayer composite film. When the separator is a multilayer composite film, the materials for each layer may be the same or different.

In some embodiments, the positive electrode plate, the separator, and the negative electrode plate may be manufactured into an electrode assembly by a winding process or a staking process.

The present application does not have particular limitation on the shape of the battery cell, which may be cylindrical, square, or in other arbitrary shapes. FIG. 1 shows a battery cell 5 with a rectangular structure as an example.

In some embodiments, as shown in FIG. 1 and FIG. 2, the outer packaging may include a housing 51 and a cover plate 53. In an example, the housing 51 may include a bottom plate and side plates connected to the bottom plate, and the bottom plate and the side plates are combined to form an accommodating cavity. The housing 51 has an opening in communication with the accommodating cavity, and the cover plate 53 is used to close the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to requirements.

The preparation method for the battery cell in the present application is well-known. In some embodiments, the positive electrode plate, the separator, the negative electrode plate, and the electrolytic solution may be assembled to form the battery cell. As an example, the positive electrode plate, the separator, and the negative electrode plate may form an electrode assembly through a winding or laminating process, the electrode assembly is placed in an outer package and dried, then the electrolytic solution is injected, followed by vacuum packaging, standing, formation, shaping, and other processes, thereby obtaining the secondary battery.

In some embodiments of the present application, the battery cell according to the present application may be assembled into a battery module. The battery module may include a plurality of battery cells, and the specific quantity may be adjusted according to the application and capacity of the battery module.

FIG. 3 is a schematic diagram of a battery module 4 as an example. As shown in FIG. 3, in the battery module 4, a plurality of battery cells 5 may be arranged and disposed sequentially along the length direction of the battery module 4. Apparently, they may also be disposed in any other manner. Further, the plurality of battery cells 5 may be fixed by a fastener.

Optionally, the battery module 4 may further include a housing having an accommodating space, and the plurality of battery cells 5 are accommodated in the accommodating space.

In some embodiments, the above-mentioned battery module may also be assembled into a battery pack, and the quantity of battery modules contained in the battery pack may be adjusted according to the application and capacity of the battery pack. FIG. 4 and FIG. 5 are schematic diagrams of battery pack 1 as an example. As shown in FIG. 4 and FIG. 5, the battery pack 1 may comprise a battery case and a plurality of the battery modules 4 disposed in the battery case. The battery case comprises an upper case body 2 and a lower case body 3. The upper case body 2 is used for covering the lower case body 3 to form a closed space for accommodating the battery modules 4. A plurality of battery modules 4 may be disposed in the battery case in any manner.

Both the battery module and the battery pack may serve as specific examples of the battery of the present application.

## Electrical device

In a third aspect, the present application provides an electrical device, which comprises at least one of the battery cell, the battery module, and the battery pack of the present application. The battery cell, the battery module, and the battery pack may be used as a power source of the electrical device or as an energy storage unit of the electrical device. The electrical device may be, but is not limited to, a mobile device (such as, a mobile phone and a notebook computer, and the like), an electric vehicle (such as a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, or the like.

The electrical device may comprise the battery cell, the battery module or the battery pack selected according to its usage requirements. FIG. 6 is a schematic diagram of an electrical device as an example. The electrical device 6 is a pure electric vehicle, a hybrid electric vehicle, or a plug-in hybrid electric vehicle. In order to meet requirements of the electrical device for high power and high energy density, the battery pack 1 or the battery module may be used. As another example, the electrical device may be a mobile phone, a tablet computer, a notebook computer, and the like. The electric device is generally required to be light and thin, and a battery cell may be used as a power supply.

## Examples

Hereinafter, embodiments of the present application will be described. The embodiments described below are exemplary and are merely used to explain the present application, and are not to be construed as limiting the present application. If specific techniques or conditions are not specified in the examples, the techniques or conditions described in the literature of the filed or the product specification shall be used. If the manufacturer of the reagent or instrument used is not specified, it is a conventional product that is commercially available.

## Example 1

(1) Preparation of positive electrode plate:

An aluminum foil having a thickness of 12 μm was used as a positive electrode current collector.

An ether polymer, $LiFePO_4$ as a positive electrode active substance, carbon black as a conductive agent, and polyvinylidene fluoride (PVDF) as a binder were added into N-methylpyrrolidone (NMP) to prepare a positive electrode slurry. The mass ratio of ether polymer, $LiFePO_4$, the conductive carbon black, PVDF and N-methylpyrrolidone (NMP) in the positive electrode slurry were 0.5:96.8:2:0.7:29. The positive electrode slurry was applied on the current collector of aluminum foil and dried at 85°C followed by cold-pressing, trimming, slicing and slitting, and then drying under vacuum at 85°C for 4h, to obtain a positive electrode plate.

(2) Preparation of negative electrode plate:

A copper foil with a thickness of 8 μm was used as a negative electrode current collector.

An ether polymer, artificial graphite as a negative electrode active substance, carbon black as a conductive agent, styrene butadiene rubber (SBR) as a binder, sodium hydroxymethylcellulose (CMC) as a thickener, and deionized water were mixed in a mass ratio of 2.5:94:0.5:2:1:100 to prepare a negative electrode slurry. The negative electrode slurry was applied on the current collector of copper foil and dried at 85°C followed by cold-pressing, trimming, slicing and slitting, and drying under vacuum at 120°C for 12h, to obtain a negative electrode plate.

(3) Preparation of electrolytic solution

In an environment with a water content of less than 10 ppm, ethylene carbonate EC and methyl ethyl carbonate (EMC) as non-aqueous organic solvents were mixed in a volume ratio of 3:7 to obtain a solvent for an electrolytic solution. Then, the mixed solvent was mixed with lithium salt $LiPF_6$ to prepare an electrolytic solution with a lithium salt concentration of 1 mol/L.

(4) Preparation of lithium-ion battery:

Polyethylene film (PE) with 16-micron thickness was used as a separator. The positive electrode plate, the separator, and the negative electrode place were stacked in order, so that the separator was located between the positive electrode plate and the negative electrode plate to provide isolation, and they were then wound up to obtain an electrode assembly; the electrode assembly was placed in an outer packaging shell and dried, and then the electrolytic solution was injected. After vacuum sealing, steady standing, formation, shaping and other processes, a lithium-ion battery was obtained.

## Comparative Example 1

A lithium-ion battery was prepared in a similar manner to that of Example 1, except that the positive electrode plate in Comparative Example 1 did not comprise an ether polymer and the negative electrode plate in Comparative Example 1 did not comprise an ether polymer.

## Comparative Example 2

A lithium-ion battery was prepared in a similar manner to that of Example 1, except that the ether polymer in the positive electrode plate and the negative electrode plate of Comparative Example 2 was adjusted.

**Examples 2 to 4**

A lithium-ion battery was prepared in a similar manner to that of Example 1, except that the ether polymers in the positive electrode plate and the negative electrode plate of Examples 2 to 4 were adjusted.

**Example 5**

A lithium-ion battery was prepared in a similar manner to that of Example 1, except that the positive electrode plate of Example 5 comprised an ether polymer while the negative electrode plate of Example 5 did not comprise an ether polymer.

**Examples 6 to 9**

A lithium-ion battery was prepared in a similar manner to that of Example 1, except that the amounts the ether polymer in the positive electrode plate in Examples 6 to 9 were adjusted.

**Examples 10 to 12**

A lithium-ion battery was prepared in a similar manner to that of Example 1, except that the amounts the ether polymer in the negative electrode plate in Examples 10 to 12 were adjusted.
**The data of Examples and Comparative Examples were shown in Table 1.**

**Test section**

(1) Test of capacity retention rate of lithium-ion battery

Each of the above-mentioned lithium-ion batteries prepared in Examples and Comparative Examples was charged at a constant current of 1C to 4.25 V in an environment of 45°C, then charged at a constant voltage of 4.25 V to a current of 0.05 C, allowed to stand for 5 minutes, and then discharged at 1C to 2.8 V, and the obtained capacity was denoted as the initial capacity C0. The above steps was repeated for the same battery and the discharge capacity Cn of the battery after the $n^{th}$ cycle was recorded. Then the capacity retention rate Pn of the battery after each cycle was calculated by Pn = Cn/C0 * 100%. By using 1200 point values of P1, P2, ... P1200 as the vertical axis and the corresponding number of cycles as the horizontal axis, a dot plot showing capacity retention rate of the battery as a function of the number of cycles was obtained. During this test, the first cycle corresponds to n = 1, the second cycle corresponds to n = 2, ... the $1200^{th}$ cycle corresponds to n = 1200. For example, the datum of capacity retention rate of each battery corresponding to Example 1 in Table 1 was the datum measured after 1200 cycles under the above test conditions, that is, the value of P1200. The testing procedures of Comparative Example 1 and other Examples were the same as that described above.

(2) Test of direct current impedance of lithium-ion battery

Each of the above-mentioned lithium-ion batteries prepared in Examples and Comparative Examples was charged at a constant current of 1C to 4.25 V at 45°C, then charged at a constant voltage of 4.25 V to a current of 0.05 C, allowed to stand for 5 minutes, and the voltage V1 was recorded. Then, the battery was discharged at 1 C for 30 seconds, and the voltage V2 was recorded, then the internal resistance DCR1 of the battery after the first cycle was obtained by (V2-V1)/1/3 C. The above steps was repeated for the same battery and the internal resistance DCRn (n = 1, 2, 3, ... 1200) of the battery after the $n^{th}$ cycle was recorded. By using 1200 point values of the above DCR1, DCR2, DCR3, ... DCR1200 as the vertical axis and the corresponding number of cycles as the horizontal axis, a graph showing the discharge DCIR of the battery (corresponding to the ether polymer of the examples and comparative examples) as a function of the number of cycles was obtained
During this test, the first cycle corresponds to n = 1, the second cycle corresponds to n = 2, ... the $1200^{th}$ cycle corresponds to n = 1200. For example, the internal resistance increase ratio of the battery of Example 1 being equal to (DCRn-DCR1)/DCR1 * 100% was shown in Table 1. The testing procedures of Comparative Example 1 and other Examples were the same as that described above. The data in Table 1 were the data measured after 1200 cycles under the above test conditions.

**Test result**

Table 1

| Items | Ether polymer | | | | | | Positive electrode plate | | | | Negative electrode plate | | | | Lithium-ion battery | |
|---|---|---|---|---|---|---|---|---|---|---|---|---|---|---|---|---|
| | Monomer 1 | Monomer 2 | Glass transition temperature $T_g$ (°C) | Molecular weight (g/mol) | K | Precipitation value m/n | Content by mass A% | λ | v (mg/s) | v/λ | Content by mass B% | λ | v (mg/s) | v/λ | Capacity retention rate % | DCIR% |
| Comparative Example 1 | / | / | / | / | / | / | / | 24.8% | 0.18 | 0.73 | / | 29.0% | 0.50 | 1.72 | 80.0 | 60 |
| Comparative Example 2 | 100% ethylene oxide | / | -67 | 400000 | 1.8 | 1.5 | 0.5 | 24.8% | 0.20 | 0.81 | 2.5 | 29.0% | 0.52 | 1.79 | 81.0 | 58 |
| Example 1 | 80% ethylene oxide | 20% Oxirane-2-ethyl ester | -45 | 250000 | 1.2 | 12 | 0.5 | 24.8% | 0.52 | 2.10 | 2.5 | 29.0% | 5.60 | 19.31 | 85.0 | 48 |
| Example 2 | 90% ethylene oxide | 10% Oxirane-2-carboxylic acid | -12 | 250000 | 1.1 | 7 | 0.5 | 24.8% | 0.45 | 2.02 | 2.5 | 29.0% | 4.00 | 13.80 | 83.0 | 50 |
| Example 3 | 88% Ethyl vinyl ether | 12% Vinyl acetate | 0 | 300000 | 1.6 | 15 | 0.5 | 27.9% | 0.38 | 1.36 | 2.5 | 33.3% | 2.70 | 8.11 | 82.0 | 52 |
| Example 4 | 100% ethylene oxide | / | -65 | 200000 | 1.3 | 10 | 0.5 | 27.9% | 0.50 | 1.79 | 2.5 | 33.3% | 5.00 | 16.80 | 84.0 | 46 |
| Example 5 | 80% ethylene oxide | 20% Oxirane-2-ethyl ester | -45 | 250000 | 1.2 | 12 | 0.5 | 24.8% | 0.52 | 2.10 | 0 | 29.0% | 0.50 | 1.72 | 83.0 | 51 |
| Example 6 | 80% ethylene oxide | 20% Oxirane-2-ethyl ester | -45 | 250000 | 1.2 | 12 | 0 | 24.8% | 0.18 | 0.73 | 2.5 | 29.0% | 5.60 | 19.31 | 84.5 | 49 |
| Example 7 | 100% ethylene oxide | / | -65 | 200000 | 1.3 | 10 | 0.1 | 24.8% | 0.20 | 0.81 | 2.5 | 29.0% | 5.00 | 16.80 | 82.0 | 48 |
| Example 8 | 100% ethylene oxide | / | -65 | 200000 | 1.3 | 10 | 1.5 | 24.8% | 0.80 | 3.23 | 2.5 | 29.0% | 5.00 | 16.80 | 85.0 | 45 |

(continued)

| Items | Ether polymer | | | | | | Positive electrode plate | | | | Negative electrode plate | | | | Lithium-ion battery | |
|---|---|---|---|---|---|---|---|---|---|---|---|---|---|---|---|---|
| | Monomer 1 | Monomer 2 | Glass transition temperature $T_g$ (°C) | Molecular weight (g/mol) | K | Precipitation value m/n | Content by mass A% | λ | v (mg/s) | v/λ | Content by mass B% | λ | v (mg/s) | v/λ | Capacity retention rate % | DCIR% |
| Example 9 | 100% ethylene oxide | / | -65 | 200000 | 1.3 | 10 | 2.0 | 24.8% | 1.20 | 4.84 | 2.5 | 29.0% | 5.00 | 16.80 | 82.0 | 52 |
| Example 10 | 100% ethylene oxide | / | -65 | 200000 | 1.3 | 10 | 0.5 | 24.8% | 0.50 | 1.79 | 0.2 | 29.0% | 3.00 | 10.30 | 84.0 | 50 |
| Example 11 | 100% ethylene oxide | / | -65 | 200000 | 1.3 | 10 | 0.5 | 24.8% | 0.50 | 1.79 | 5.0 | 29.0% | 7.00 | 24.14 | 87.0 | 44 |
| Example 12 | 100% ethylene oxide | / | -65 | 200000 | 1.3 | 10 | 0.5 | 24.8% | 0.50 | 1.79 | 6.0 | 29.0% | 10.00 | 34.50 | 83.0 | 52 |

In Table 1, 100% ethylene oxide (or Oxirane) refers to the mass percent of ethylene oxide being 100% based on the total mass of the monomer 1 and the monomer 2.

80% ethylene oxide refers to the mass percent of ethylene oxide being 80% based on the total mass of the monomer 1 and the monomer 2, and 20% oxirane-2-ethyl ester refers to the mass percent of oxirane-2-ethyl ester being 20% based on the total mass of the monomer 1 and the monomer 2.

As can be seen from Table 1, compared with Comparative Example 1, the ether polymers of the present application were added in the positive electrode plates and negative electrode plates in Examples of the present application, which can form a uniform high infiltration point inside the active substance layers and uniformly improve infiltration performance on the active substance layers, thereby increasing liquid absorption speed of the entire active substance layers and thus improving cycle performance of the battery cells using the electrode plates.

Compared with Comparative Example 2, cycle performance of the lithium ion batteries can be further significantly improved in Examples of the present application where $v/\lambda > 1$ is satisfied.

While the present application has been described with reference to preferred embodiments, various modifications may be made thereto and components therein may be replaced with equivalents without departing from the scope of the present application. In particular, the technical features mentioned in the various embodiments can be combined in any manner as long as there is no structural conflict. The present application is not limited to the specific embodiments disclosed herein, but includes all technical solutions falling within the scope of the claims.

## Claims

1. A negative electrode plate, comprises a current collector and an active substance layer disposed on at least one surface of the current collector, wherein the active substance layer comprises an active substance and an ether polymer, and the ether polymer satisfies:

$$\lambda = 1 - \frac{P_1}{P_2} \qquad \text{Formula (1)},$$

$$v = \pi \times \left(\frac{d}{2}\right)^2 \times h \times \frac{\rho}{t} \qquad \text{Formula (2)},$$

$$v/\lambda > 1.00 \qquad \text{Formula (3)};$$

where in Formula (1) to Formula (3),

$\lambda$ represents a porosity of the active substance layer;
$P_1$ represents an actual compaction density of the active substance layer, in units of $g/cm^3$;
$P_2$ represents a true compaction density of the active substance, in units of $g/cm^3$;
v represents a liquid absorption rate of the active substance layer, in units of mg/s;
d represents a diameter of a capillary tube in a capillary test for the active substance layer, in units of mm;
h represents a liquid level height in the capillary tube, in units of mm;
$\rho$ represents a density of an electrolytic solution in the capillary test, in units of $g/cm^3$; and
t represents time during which the electrolytic solution is absorbed in the capillary tube, in units of s.

2. The electrode plate according to claim 1, wherein the active substance comprises a positive electrode active substance,
the active substance layer satisfies: $1.00 < v/\lambda < 4.00$; optionally, $1.20 \leq v/\lambda \leq 3.80$.

3. The electrode plate according to claim 1 or 2, wherein the active substance comprises a positive electrode active substance, and

a mass percentage content of the ether polymer is A%, based on a mass of the active substance layer, wherein $0.1 \leq A \leq 1.5$.

4. The electrode plate according to claim 1, wherein the active substance comprises a negative electrode active substance, and

the active substance layer satisfies: $3.00 < v/\lambda < 50.00$; optionally, $3.40 \leq v/\lambda \leq 30.00$.

**5.** The electrode plate according to claim 1 or 4, wherein the active substance comprises a negative electrode active substance, and

a mass percentage content of the ether polymer is B%, based on a mass of the active substance layer, wherein $0.2 \leq B \leq 5.0$.

**6.** The electrode plate according to any one of claims 1 to 5, wherein the ether polymer has a slope K of an elastic modulus G'-loss modulus G" curve that is measured by subjecting a sheet-like structure formed of the ether polymer to dynamic frequency scanning tests at $(T_m+20)$°C, and $1<K<\infty$, optionally $1<K\leq100$, further optionally $1<K\leq10$, where $T_m$°C represents the melting temperature of the ether polymer.

**7.** The electrode plate according to any one of claims 1 to 6, wherein the ether polymer has a glass transition temperature of $T_g$ in °C, and $-100\leq T_g\leq60$; optionally, $-80\leq T_g\leq30$.

**8.** The electrode plate according to any one of claims 1 to 7, wherein the ether polymer comprises the structural unit shown in Formula (I):

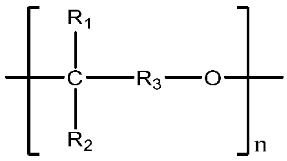 Formula (I),

in which, $R_1$ and $R_2$ each independently comprise a hydrogen atom, a substituted or unsubstituted C1-C3 alkyl group, or a substituted or unsubstituted C1-C3 alkoxy group; $R_3$ comprises a substituted or unsubstituted C1-C5 methylene group;
optionally, $R_1$ and $R_2$ each independently comprise a hydrogen atom, a substituted or unsubstituted C1-C2 alkyl; and/or $R_3$ comprises a single bond, a substituted or unsubstituted C1-C4 methylene group.

**9.** The electrode plate according to claim 8, wherein the ether polymer comprises at least one of the structural units shown in Formula (I-1) to Formula (I-8),

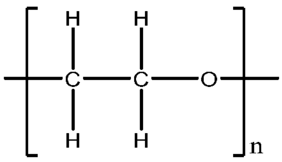 Formula (I-1), 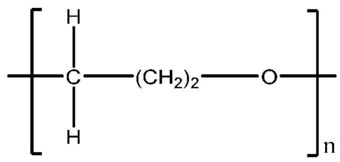 Formula (I-2),

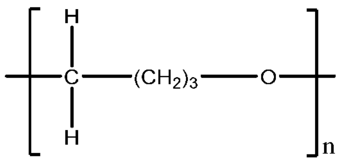 Formula (I-3), 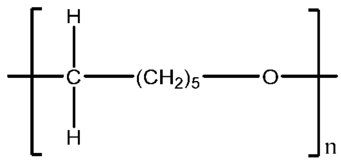 Formula (I-4),

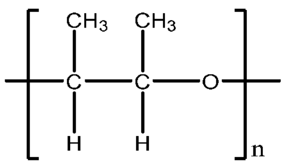 Formula (I-5), 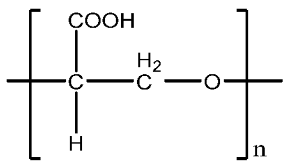 Formula (I-6),

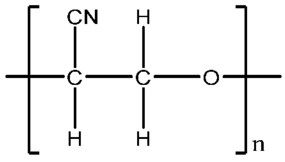 Formula (I-7), 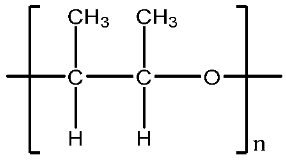 Formula (I-8).

**10.** The electrode plate according to any one of claims 1 to 9, wherein the ether polymer comprises the structural units shown in Formula (II),

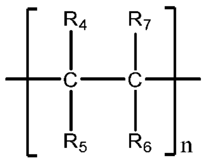 Formula (II),

in which, $R_4$ to $R_7$ each independently comprise a hydrogen atom, a substituted or unsubstituted C1-C3 alkyl group, or a substituted or unsubstituted C1-C3 alkoxy group or ether group, and at least one of $R_4$ to $R_7$ comprise a substituted or unsubstituted C1-C3 alkoxy group or ether group;

optionally, $R_4$ to $R_7$ each independently comprise a hydrogen atom, a substituted or unsubstituted C1-C2 alkyl group, or a substituted or unsubstituted C1-C2 alkoxy group or ether group, and at least one of $R_4$ to $R_7$ comprise a substituted or unsubstituted C1-C2 alkoxy group or ether group.

**11.** The electrode plate according to claim 10, wherein the ether polymer comprises at least one of the structural units shown in Formula (II-1) to Formula (II-7),

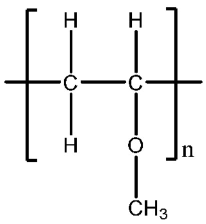 (II-1), 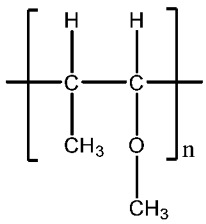 (II-2), 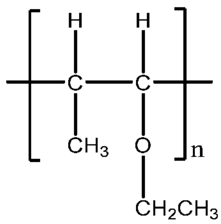 (II-3),

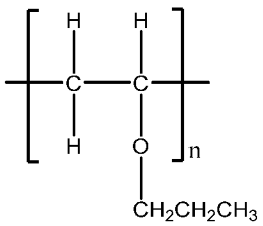 (II-4), 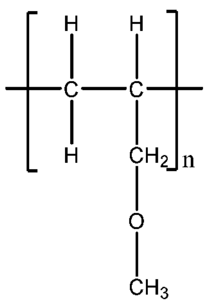 (II-5), 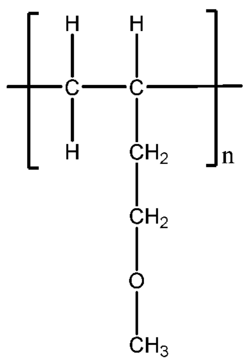 (II-6),

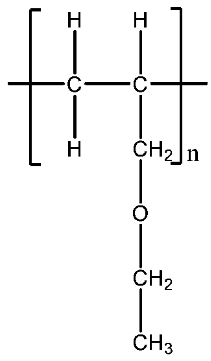

(II-7).

**12.** The electrode plate according to any one of claims 8 to 11, wherein

n is a positive integer selected from 1500 to 25000; and/or
the ether polymer has a molecular weight of from $1.2\times10^5$g/mol to $1.0\times10^6$g/mol.

**13.** A battery cell comprising an electrode plate according to any one of claims 1 to 12.

**14.** A battery, comprising the battery cell according to claim 13.

**15.** An electrical device comprising the battery according to claim 14.

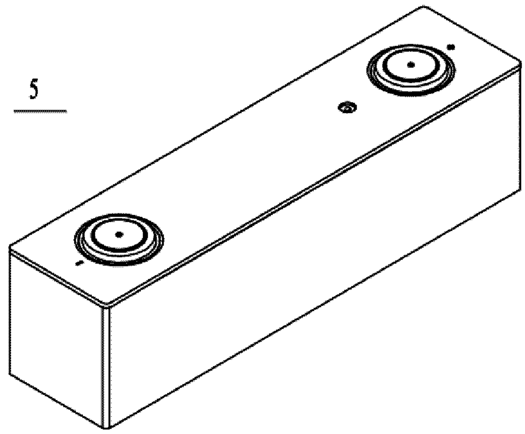


FIG. 1

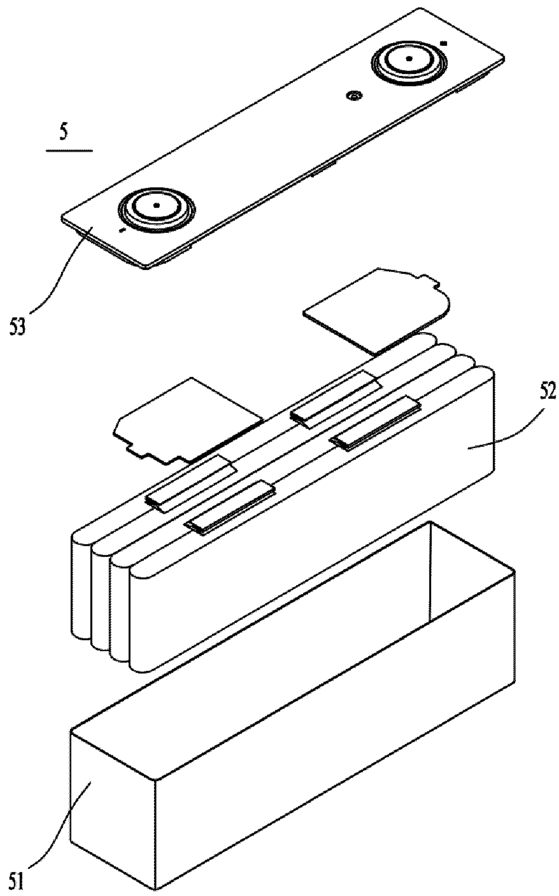


FIG. 2

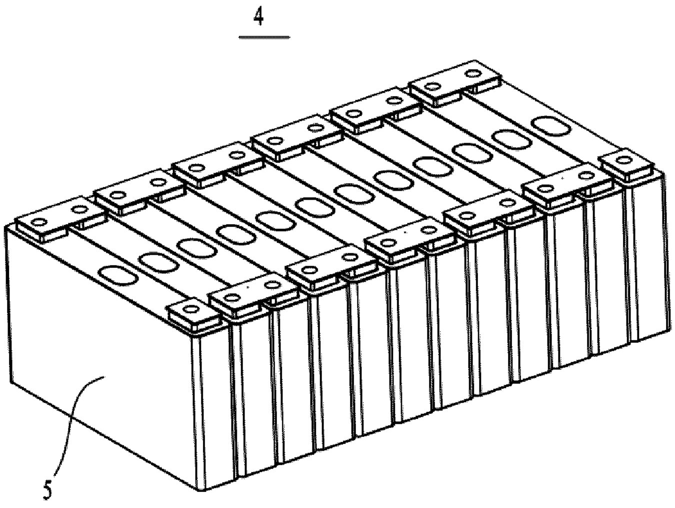


FIG. 3

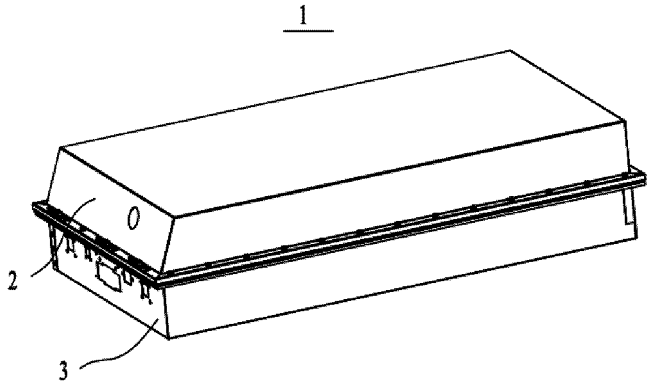


FIG. 4

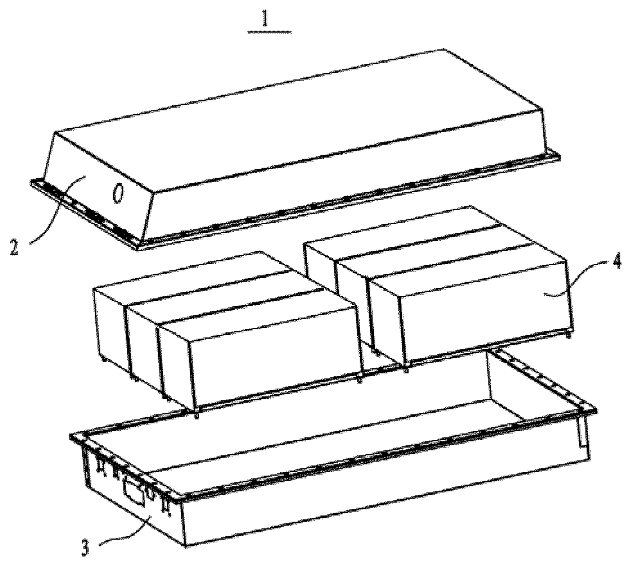


FIG. 5

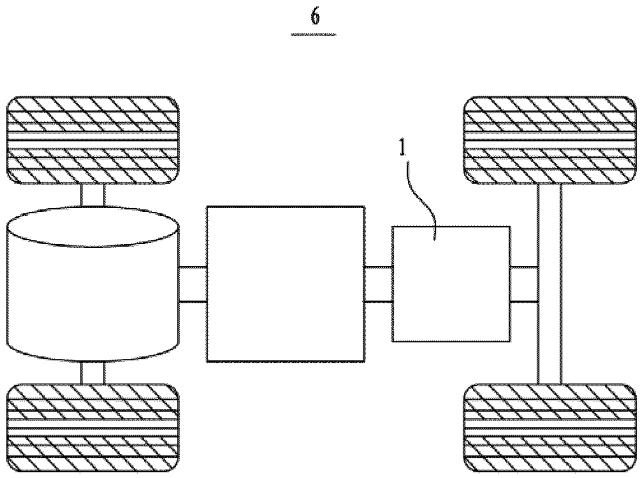


FIG. 6

**INTERNATIONAL SEARCH REPORT**

International application No.
**PCT/CN2023/076886**

**A. CLASSIFICATION OF SUBJECT MATTER**

H01M 4/13(2010.01)i；H01M 4/62(2006.01)i

According to International Patent Classification (IPC) or to both national classification and IPC

**B. FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNTXT, CNKI, ENTXT, ENTXTC, DWPI: 电极, 正极, 负极, 电解液, 浸润, 保液, 吸液, 吸收, 环氧乙烷, 单体, 聚合, 交联, 醚, electrode, positive, negative, electrolyte, impregnat+, contain+, absorb+, ethylene oxide, oxirane, monomer, polymeriz+, crosslink+, cross link+, ether

**C. DOCUMENTS CONSIDERED TO BE RELEVANT**

| Category* | Citation of document, with indication, where appropriate, of the relevant passages | Relevant to claim No. |
|---|---|---|
| X | CN 101454929 A (ZEON CORP.) 10 June 2009 (2009-06-10)<br>description, page 2, line 8-page 11, line 9 | 1-15 |
| X | CN 103500835 A (DONGGUAN AMPEREX TECHNOLOGY LTD.) 08 January 2014 (2014-01-08)<br>description, paragraphs 4-24 | 1-15 |
| X | CN 109216659 A (NINGDE CONTEMPORARY AMPEREX TECHNOLOGY CO., LTD.) 15 January 2019 (2019-01-15)<br>description, paragraphs 6-33 | 1-15 |

☐ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 October 2023** | **30 October 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/076886**

| Patent document cited in search report | | | Publication date (day/month/year) | Patent family member(s) | | | Publication date (day/month/year) |
|---|---|---|---|---|---|---|---|
| CN | 101454929 | A | 10 June 2009 | WO | 2007122947 | A1 | 01 November 2007 |
| | | | | KR | 20080104045 | A | 28 November 2008 |
| | | | | KR | 101349573 | B1 | 09 January 2014 |
| | | | | US | 2009274958 | A1 | 05 November 2009 |
| | | | | US | 8936872 | B2 | 20 January 2015 |
| | | | | JPWO | 2007122947 | A1 | 03 September 2009 |
| | | | | JP | 5326566 | B2 | 30 October 2013 |
| | | | | CN | 101454929 | B | 25 May 2011 |
| CN | 103500835 | A | 08 January 2014 | | None | | |
| CN | 109216659 | A | 15 January 2019 | CN | 109216659 | B | 11 January 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 245862009 T
- GB 60402002 T
- GB 190772016 T